(19) Europäisches Patentamt / European Patent Office / Office européen des brevets

(11) **EP 2 390 279 A1**

(12) **EUROPEAN PATENT APPLICATION**

(43) Date of publication:
**30.11.2011  Bulletin 2011/48**

(51) Int Cl.:
*C08J 5/18* (2006.01)          *C08L 23/14* (2006.01)
*C08L 23/16* (2006.01)        *C08K 5/01* (2006.01)
*C08L 23/10* (2006.01)

(21) Application number: **09015652.2**

(22) Date of filing: **17.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **ExxonMobil Chemical Patents Inc.**
**Baytown TX 77522-2149 (US)**

(72) Inventors:
• **Gahleitner, Markus**
  **4501 Neuhofen a.d. Krems (AT)**
• **Grein, Christelle**
  **4020 Linz (AT)**
• **Leiter, Judith**
  **1140 Wien (AT)**
• **Lin, Chon-Yie**
  **Houston**
  **TX 77059 (US)**
• **Keplinger, Karl**
  **4030 Linz (AT)**

(74) Representative: **Gerstberger, Gisela**
  **ExxonMobil Chemical Europe Inc.**
  **P.O. Box 105**
  **1830 Machelen (BE)**

(54) **Polypropylene composition with plasticiser for sterilisable films**

(57)    The present invention is directed to a polyolefin composition comprising

(A) 85 to 99 wt% of a multiphase propylene copolymer having at least one glass transition temperature determined by DMTA, and

(B) 1 to 15 wt% of a hydrocarbon fluid capable of lowering said at least one glass transition temperature of said multiphase propylene copolymer,

wherein said multiphase propylene copolymer comprises an elastomer determined as the fraction soluble in cold xylene (XCS) in an amount of from 5 to 30 wt% of the multiphase propylene copolymer, and

wherein said fraction soluble in cold xylene (XCS) has an intrinsic viscosity in the range of 0.5 to 4.5 dl/g,

to a film comprising said polyolefin composition,

to a film comprising a polyolefin composition and having a haze of less than 30 % at 100 μm film thickness both before and after a steam sterilization step at a temperature of 121 °C for 30 minutes,

to an article made of said films, and

to the use of a hydrocarbon fluid in a polyolefin composition comprising a multiphase propylene copolymer for improved retaining of flexibility and transparency of a sterilized film comprising the composition.

EP 2 390 279 A1

**Description**

The present invention relates to a polyolefin composition comprising a multiphase propylene copolymer and a hydrocarbon fluid. Furthermore, the invention relates to polymer films comprising a polyolefin and exhibiting improved properties after sterilization above a temperature of 110 °C and to articles comprising such films.

Steam sterilization is the predominant method applied on flexible packaging materials in both the medical and the food packaging application segment. The temperature range commonly applied for such steam sterilization processes is between 110 and 130 °C, preferably between 120 and 125 °C. Plasticized poly(vinyl chloride) containing relatively high amounts of polar low viscosity plasticizers like bis(2-ethylhexyl)phthalate is generally used for such applications, as it combines high levels of flexibility, impact resistance and transparency while retaining these positive properties also after the sterilization step, explicable by the lack of ability of this polymer to post-crystallize. The plasticizers significantly lower the glass transition temperature of the polymer and make it softer.

Both the use of halogen containing materials and the application of phthalate type plasticizers has been intensely discussed in recent years for reasons of health hazards and environmental effects. It is therefore desirable to replace such materials for the use in flexible packaging by halogen-free polymer materials. Examples of such flexible polymer materials are polyolefins, thermoplastic poly(urethanes) and di- or triblock copolymers of styrene, butadiene and optionally other monomers in either non-hydrogenated or hydrogenated form (e.g. SB(S), SEB(S) or SE(P)S copolymers). For economical reasons, polyolefin compositions are preferred, with the limitation of comprising a main component having a melting point clearly above the sterilization temperature. Compositions based on propylene - predominantly homo- and copolymers - are thus especially preferred.

Resulting from the post-crystallization behavior inherent to isotactic poly(propylene), both mechanical and optical properties of the respective films are changed significantly in a steam sterilization step in the temperature range indicated above (see e.g. the description by Gahleitner et al., Macromol. Sci.-Phys., B41 (2002) 833-49). While the mechanical changes can be dealt with by using impact copolymers and/or external elastomers as described for example in US 5,695,840 or EP 0,765,654 A1, the optical changes are still generally regarded as critical. The respective effects are generally more critical for materials with higher flexibility or lower modulus, as these materials have a higher capability of post-crystallization.

It was therefore an object of the present invention to develop polyolefin compositions for the manufacture of a polymer film suitable for applications requiring a heat or steam sterilization step above a temperature of 110 °C, which film retains transparency after the heat treatment. The polymer film should furthermore be free of halogen-containing compounds.

It has now been found that the object can be achieved by polyolefin compositions comprising a multiphase propylene copolymer and a hydrocarbon fluid, which modifies the multiphase propylene copolymer by acting in some ways like a plasticizer.

The present invention therefore provides a polyolefin composition comprising

(A) 85 to 99 wt% of a multiphase propylene copolymer having at least one glass transition temperature determined by DMTA, and

(B) 1 to 15 wt% of a hydrocarbon fluid capable of lowering said at least one glass transition temperature of said multiphase propylene copolymer,

wherein said multiphase propylene copolymer comprises an elastomer determined as the fraction soluble in cold xylene (XCS) in an amount of from 5 to 30 wt% of the multiphase propylene copolymer, and

wherein said fraction soluble in cold xylene (XCS) has an intrinsic viscosity in the range of 0.5 to 4.5 dl/g.

By "multiphase propylene copolymer" a propylene copolymer is designated which contains a propylene homo- or copolymer matrix phase and at least one further polymer phase which is immiscible (i.e. thermodynamically incompatible) with the propylene homo- or copolymer matrix phase thereby resulting in a phase separation. Said at least one further polymer phase usually and preferably is an elastomer. A common example for "multiphase propylene copolymer" is a morphology consisting of a "matrix" (continuous) phase and at least one "dispersed" (discontinuous) phase. The dispersed phase takes the form of discrete domains (particles) distributed within the matrix (or within other phase domains, if there are more than two phases).

The presence of multiple phases is determined using microscopy techniques, e.g., optical microscopy, scanning electron microscopy (SEM), or atomic force microscopy (AFM), or by the presence of two glass transition peaks in a dynamic mechanical thermal analysis (DMTA) experiment. In the event of disagreement among these methods, the AFM determination shall be used.

The composition of the invention allows for the production of films which have the desired softness, transparency and impact resistance e.g. for flexible packaging applications and which retain those properties, in particular transparency, even after sterilization of the polymer film above a temperature of 110 °C.

The polyolefin composition is preferably free of halogen-containing compounds. Such compositions allow for the production of films preferable from the standpoint of health hazards and environmental effects.

Preferably, the polyolefin composition according to the present invention has a melting point according to DSC above 148 °C.

Said melting point will be usually not higher than 190 °C.

Preferably, the multiphase propylene copolymer has a melting point according to DSC above 150 °C.

Said melting point will be usually not higher than 190 °C.

The melt flow rate (MFR) determined at 230 °C and a load of 2.16 kg of the polyolefin composition according to the present invention preferably is in the range of 1 to 100 g/10 min, more preferably is in the range of 2 to 50 g/10 min.

The melt flow rate (MFR) determined at 230 °C and a load of 2.16 kg of the multiphase propylene copolymer preferably is in the range of 0.9 to 90 g/10 min, more preferably is in the range of 1.8 to 45 g/10 min.

The amount of the multiphase propylene copolymer in the polyolefin composition preferably is from 85 to 98 wt%, more preferably from 87.5 to 98 wt%.

It is preferred that said multiphase propylene copolymer has at least two clearly discernible glass transition temperatures as determined by DMTA.

Preferably, one of the glass transition temperatures of the multiphase propylene copolymer is in the range from -10 °C to +5 °C. This glass transition temperature is associated with the propylene homo- or copolymer matrix phase.

Furthermore, preferably a further glass transition temperature of the dispersed phase of the multiphase propylene copolymer is below -20 °C, more preferably in the range from -20 °C to -120 °C, still more preferably in the range from -40 °C to -100 °C. This glass transition temperature is usually associated with the elastomer phase.

The elastomer of the multiphase propylene copolymer is dispersed in the propylene homo- or copolymer matrix phase.

It is preferred that said multiphase propylene copolymer has an elastomer content expressed as the fraction of the multiphase propylene copolymer soluble in cold xylene (XS) in the range of 8 to 25 wt%, more preferably in the range from 10 to 22 wt% of the multiphase propylene copolymer.

Said fraction soluble in cold xylene preferably has an intrinsic viscosity in the range of 1.0 to 4.0 dl/g.

Preferably, the elastomer is an ethylene copolymer with the comonomers preferably being alpha-olefins, more preferably $C_3$- to $C_{12}$-alpha-olefins, still more preferably $C_3$- to $C_8$-alpha-olefins, and most preferably propylene.

The elastomer hence preferably is an ethylene-propylene-rubber (EPR) or a polyethylene copolymer having a density of less than 0.920 g/cm$^3$.

In the elastomeric ethylene copolymer, preferably ethylene is present in an amount of 30 wt% or more. The other comonomers in the elastomeric ethylene copolymer preferably are present in an amount of up to 70 wt%.

Preferably, the ethylene content in the elastomeric ethylene copolymer is not higher than 85 wt%.

The matrix phase of the multiphase propylene copolymer comprises, preferably consists of, a propylene homo- or copolymer.

If the matrix phase comprises or consists of a propylene copolymer, the preferred comonomer is ethylene and/or a further alpha-olefin with 4 to 12, preferably 4 to 8 carbon atoms, in particular ethylene.

Preferably, comonomers are present in the propylene copolymer in an amount of up to 10 wt%.

The matrix phase preferably is present in the multiphase propylene copolymer in an amount of from 70 to 95 wt%, more preferably from 75 to 90 wt%.

It is preferred that the multiphase propylene copolymer consists of the matrix phase and the dispersed elastomer phase.

Multiphase propylene copolymers for use in the polyolefin composition of the invention can be produced by processes generally known to those skilled in the art.

For the production of highly isotactic polypropylene homopolymer, which is a preferred material for the matrix phase of the multiphase propylene copolymer, single- or multi-stage polymerization processes based on a heterogeneous Ti/Mg type catalyst (Ziegler/Natta type) or a metallocene (single-site) type catalyst can be employed. The catalyst system will normally be complemented by a co-catalyst component and at least one electron donor (internal and/or external electron donor, preferably at least one external donor) controlling the stereoregularity of the produced polymer.

Suitable catalysts are in particular disclosed in US 5,234,879, WO 92/19653, WO 92/19658 and WO 99/33843, incorporated herein by reference. Typically the co-catalyst is an Al-alkyl based compound. Preferred external donors are the known silane-based donors, such as dicyclopentyl dimethoxy silane or cyclohexyl methyldimethoxy silane.

Multiphase polypropylene copolymers can be produced either by melt mixing of the matrix phase, e.g. a polypropylene homopolymer, with an elastomer, e.g. an ethylene-propylene rubber or a polyethylene copolymer having a density of less than 0.920 g/cm$^3$.

Particular preferred in accordance with the present invention are multiphase propylene copolymer compositions prepared by sequential polymerization, in particular reactor blends.

Further details concerning the manufacture of multiphase propylene copolymers can be derived from WO 97/40080.

The polyolefin composition further comprises a hydrocarbon fluid reducing at least one glass transition temperature, preferably the glass transition temperatures of both matrix and dispersed phases, of the multiphase propylene copolymer.

Only for clarification purpose it should be noted that the reduction of the glass transition temperature is to be determined so that, first, the glass transition temperature(s) of the multiphase propylene copolymer without hydrocarbon fluid, and, second, the glass transition temperature after addition of the hydrocarbon fluid is determined by DMTA.

The term "hydrocarbon fluid" as used herein denotes an aliphatic hydrocarbon, preferably a paraffin, typically comprising $C_6$ to $C_{200}$ paraffins. The term "paraffins", as used herein, includes all isomers of $C_6$ to $C_{200}$ paraffins including branched and linear structures, and blends thereof. The individual paraffins may include saturated cyclic hydrocarbons.

Preferably, the hydrocarbon fluid has a pour point of less than 0 °C.

Said pour point will be usually at least -200 °C.

Preferably, the hydrocarbon fluid has a kinematic viscosity (ASTM D445-97) of from 0.1 to 3000 mm$^2$/s at 100 °C, more preferably of from 1 to 3000 mm$^2$/s at 100 °C.

Useful hydrocarbon fluids may include so called polyalphaolefins (PAOs) and isoparaffins.

Preferably, the glass transition temperature(s) of the matrix phase in the multiphase propylene copolymer is (are) lowered by at least 1 °C, more preferably at least 2 °C, and more preferably at least 4 °C.

Usually, the glass transition temperature(s) is (are) lowered by at most 25 °C.

The hydrocarbon fluid preferably is selected so that it is miscible with the multiphase propylene copolymer.

A hydrocarbon fluid which is miscible with the multiphase propylene copolymer can be determined by observing no additional glass transition temperature created by the hydrocarbon fluid. Alternatively, there is no additional phase created by the miscible hydrocarbon fluid when examining the microscopic images of samples, i.e. by atomic force microscopy.

Preferably, the hydrocarbon fluid is present in the polyolefin composition in an amount of 2 to 15 wt%, and more preferably 2 to 12.5 wt%.

Typically, the glass transition temperature(s) of the matrix phase in the multiphase propylene copolymer will be lowered by 5 °C or more for a hydrocarbon fluid concentration of 10 wt%.

It is furthermore preferred that said hydrocarbon fluid has a density at +23 °C of less than 0.860 g/cm$^3$.

Preferably, said hydrocarbon fluid is amorphous as indicated by the absence of a melting peak and a crystallization peak in a DSC heating scan starting at least 20°C below the pour point of the hydrocarbon fluid.

It is also preferred that said hydrocarbon fluid has a glass transition temperature as determined by DSC of -50 °C or lower. Said glass transition temperature will usually be -200 °C or higher.

For achieving the desired positive effects it is especially preferred that the hydrocarbon fluid is a non-functionalized hydrocarbon fluid.

In one embodiment, the hydrocarbon fluid of the present invention is an aliphatic hydrocarbon and does not contain an appreciable extent of functional groups selected from, but not limited to, hydroxide, aryls and substituted aryls, halogens, alkoxys, carboxylates, esters, ethers, acrylates, oxygen, nitrogen, and carboxyl.

By "appreciable extent of functional groups", it is meant that these groups and compounds comprising these groups are not deliberately added to the hydrocarbon fluid, and if present at all, are present at less than 5 wt%, more preferably less than 4 wt%, more preferably less than 3 wt%, more preferably less than 2 wt%, more preferably less than 1 wt%, more preferably less than 0.7 wt%, more preferably less than 0.5 wt%, more preferably less than 0.3 wt%, more preferably less than 0.1 wt%, more preferably less than 0.05 wt%, more preferably less than 0.01 wt%, more preferably less than 0.001 wt%, where wt% is based upon the weight of the hydrocarbon fluid.

In another embodiment, the hydrocarbon fluid is an aliphatic hydrocarbon that does not contain olefinic unsaturation to an appreciable extent. By "appreciable extent of olefinic unsaturation" it is meant that the carbons involved in olefinic bonds account for less than 10 %, preferably less than 9 %, more preferably less than 8 %, more preferably less than 7 %, more preferably less than 6 %, more preferably less than 5 %, more preferably less than 4 %, more preferably less than 3 %, more preferably less than 2 %, more preferably less than 1 %, more preferably less than 0.7 %, more preferably less than 0.5 %, more preferably less than 0.3 %, more preferably less than 0.1 %, more preferably less than 0.05 %, more preferably less than 0.01 %, more preferably less than 0.001 %, of the total number of carbons.

In some embodiments, the percent of carbons of the hydrocarbon fluid involved in olefinic bonds is between 0.001 and 10 % of the total number of carbon atoms in the hydrocarbon fluid, preferably between 0.01 and 7 %, preferably between 0.1 and 5 %, more preferably less than 1 %. Percent of carbons involved in olefinic bonds is determined by the method described under Test Methods below.

In one embodiment, the hydrocarbon fluid comprises $C_6$- to $C_{200}$-paraffins, more preferably $C_8$- to $C_{100}$-paraffins.

In another embodiment, the hydrocarbon fluid consists of $C_6$- to $C_{200}$-paraffins, more preferably $C_8$- to $C_{100}$-paraffins.

For purpose of the present invention and description herein, the term "paraffin" includes all isomers such as n-paraffins, branched paraffins, isoparaffins, and may include cyclic aliphatic species, and blends thereof, and may be derived synthetically by means known in the art, or from refined crude oil in such a way as to meet the requirements described for desirable hydrocarbon fluids described herein. It will be realized that the classes of materials described herein that are useful as hydrocarbon fluids can be utilized alone or admixed with other hydrocarbon fluids described herein in order to obtain desired properties.

In one embodiment, the hydrocarbon fluid has a pour point (ASTM D97) of less than -10 °C, less than -20 °C in another embodiment, less than -25 °C in another embodiment, less than -30 °C in yet another embodiment, less than -35 °C in yet another embodiment, less than -40 °C in yet another embodiment, less than -50 °C in yet another embodiment, and less than -60 °C in yet another embodiment.

Furthermore, the hydrocarbon fluid in one embodiment has a pour point greater than -120 °C, and greater than -200 °C in yet another embodiment.

In another embodiment the hydrocarbon fluid described herein may have a Viscosity Index (VI) as measured by ASTM D2270 of 90 or more, preferably 95 or more, more preferably 100 or more, more preferably 105 or more, more preferably 110 or more, more preferably 115 or more, more preferably 120 or more, more preferably 125 or more, more preferably 130 or more.

In yet another embodiment the hydrocarbon fluid has a VI of 400 or lower, preferably of 350 or lower.

In some embodiments, the hydrocarbon fluid described herein may have a kinematic viscosity at 100 °C (ASTM D445) of at least 2 $mm^2$/s, from 3 to 3000 $mm^2$/s in another embodiment, from 6 to 300 $mm^2$/s in another embodiment, from 6 to 200 $mm^2$/s in another embodiment, from 8 to 100 $mm^2$/s in yet another embodiment, from 4 to 50 $mm^2$/s in yet another embodiment, less than 50 $mm^2$/s in yet another embodiment, less than 25 $mm^2$/s in yet another embodiment, and 35 $mm^2$/s or greater in yet another embodiment.

In another embodiment any hydrocarbon fluid described herein may have a flash point (ASTM D92) of 200 °C or more, preferably 210 °C or more, preferably 220 °C or more, preferably 230 °C or more, preferably 240 °C or more, preferably 245 °C or more, preferably 250 °C or more, preferably 260 °C or more, preferably 270 °C or more, preferably 280 °C or more.

In another embodiment the hydrocarbon fluid has a flash point of 300 °C or less, preferably of 290 °C or less.

In a particular embodiment, the hydrocarbon fluid described herein may have a Viscosity Index of 120 or more, a flash point greater than 200 °C and (1) a pour point of -25 °C or less or (2) a kinematic viscosity at 100 °C of 35 $mm^2$/s or more.

The hydrocarbon fluid described herein may have a dielectric constant measured at 20 °C of less than 3.0 in one embodiment, and less than 2.8 in another embodiment, less than 2.5 in another embodiment, and less than 2.3 in yet another embodiment, and less than 2.1 in yet another embodiment.

Said dielectric constant will usually be higher than 0.1.

Polypropylene itself has a dielectric constant (1 kHz, 23 °C) of at least 2.3 according to the CRC HANDBOOK OF CHEMISTRY AND PHYSICS (David R. Lide, ed. 82d ed. CRC Press 2001).

The hydrocarbon fluid described herein may have a density (ASTM D4052, 15.6/15.6 °C) of less than 0.88 g/$cm^3$ in one embodiment, and less than 0.87 g/$cm^3$ in another embodiment, and less than 0.86 g/$cm^3$ in another embodiment, and less than 0.85 g/$cm^3$ in another embodiment. Furthermore, the hydrocarbon fluid described herein may have a density (ASTM D4052, 15.6/15.6 °C) of 0.80 g/$cm^3$ or more in one embodiment, 0.81 g/$cm^3$ or more in another embodiment, and 0.82 g/$cm^3$ or more in another embodiment.

In a preferred particular embodiment, the hydrocarbon fluid described herein has a density (15.6/15.6 °C) of 0.85 g/$cm^3$ or less, preferably between 0.80 g/$cm^3$ and 0.85 g/$cm^3$, and a kinematic viscosity at 100 °C of 3 $mm^2$/s or more, preferably 4 $mm^2$/s or more, more preferably 5 $mm^2$/s or more, more preferably 8 $mm^2$/s or more, more preferably 10 $mm^2$/s or more, more preferably 15 $mm^2$/s or more, and most preferably 20 $mm^2$/s or more and/or a carbon number of at least 20.

In another preferred particular embodiment, any hydrocarbon fluid described herein has a density (15.6/15.6 °C) of 0.86 g/$cm^3$ or less, preferably between 0.81 g/$cm^3$ and 0.86 g/$cm^3$, more preferably between 0.82 g/$cm^3$ and 0.855 g/$cm^3$, and a kinematic viscosity at 100 °C of 5 $mm^2$/s or more, more preferably 6 $mm^2$/s or more, more preferably 8 $mm^2$/s or more, more preferably 10 $mm^2$/s or more, more preferably 12 $mm^2$/s or more, more preferably 15 $mm^2$/s or more, more preferably 20 $mm^2$/s, and most preferably 35 $mm^2$/s or more, and/or a carbon number of at least 30.

In another preferred particular embodiment, the hydrocarbon fluid has a density (15.6/15.6 °C) of 0.87 g/$cm^3$ or less, more preferably between 0.82 and 0.87 g/$cm^3$, and a kinematic viscosity at 100 °C of 10 $mm^2$/s or more, preferably 12 $mm^2$/s or more, more preferably 14 $mm^2$/s or more, more preferably 16 $mm^2$/s or more, more preferably 20 $mm^2$/s or more, more preferably 30 $mm^2$/s or more, more preferably 35 $mm^2$/s or more, and most preferably 40 $mm^2$/s or more, and/or a carbon number of at least 50.

In yet another preferred particular embodiment, the hydrocarbon fluid has a density (15.6/15.6 °C) of 0.88 g/$cm^3$ or less, preferably 0.87 g/$cm^3$ or less, more preferably between 0.82 and 0.87 g/$cm^3$, and a kinematic viscosity at 100 °C of 15 $mm^2$/s or more, preferably 20 $mm^2$/s or more, more preferably 25 $mm^2$/s or more, more preferably 30 $mm^2$/s or more, and most preferably 40 $mm^2$/s or more, and/or a carbon number of at least 60.

The hydrocarbon fluid described herein may have an initial boiling point (ASTM D1160) of from 300 °C to 600 °C in one embodiment, and from 350 °C to 500 °C in another embodiment, and greater than 400 °C in yet another embodiment.

In other embodiments the hydrocarbon fluid described herein may have a low degree of color, such as typically identified as "water white", "prime white", "standard white", or "bright and clear," preferably an APHA color of 100 or less, preferably 80 or less, preferably 60 or less, preferably 40 or less, preferably 20 or less, as determined by ASTM D1209.

Said APHA color of the hydrocarbon fluid will usually be at least 1.

The hydrocarbon fluid preferably has a number average molecular weight ($M_n$) of 21,000 g/mol or less, more preferably 20,000 g/mol or less, more preferably 19,000 g/mol or less, more preferably 18,000 g/mol or less, more preferably 16,000 g/mol or less, more preferably 15,000 g/mol or less, more preferably 13,000 g/mol or less, and 10,000 g/mol or less in yet another embodiment, and 5,000 g/mol or less in yet another embodiment, and 3,000 g/mol or less in yet another embodiment, and 2,000 g/mol or less in yet another embodiment, and 1500 g/mol or less in yet another embodiment, and 1,000 g/mol or less in yet another embodiment, and 900 g/mol or less in yet another embodiment, and 800 g/mol or less in yet another embodiment, and 700 g/mol or less in yet another embodiment, and 600 g/mol or less in yet another embodiment, and 500 g/mol or less in yet another embodiment.

Preferably, $M_n$ of the hydrocarbon fluid is at least 200 g/mol, more preferably at least 300 g/mol.

$M_n$ is determined according to the methods specified under Fluid Properties in the Test Methods section below.

In a preferred particular embodiment the hydrocarbon fluids described herein have a kinematic viscosity at 100 °C of 3 to 3000 mm$^2$/s, preferably 6 to 300 mm$^2$/s, more preferably 8 to 100 mm$^2$/s, and/or a number average molecular weight ($M_n$) of 300 to 21,000 g/mol, preferably 500 to 5,000 g/mol, more preferably 600 to 3,000 g/mol; and/or a carbon number of 20 to 1500, preferably 35 to 400, more preferably 40 to 250.

In another preferred particular embodiment the hydrocarbon fluids described herein have a kinematic viscosity at 100 °C of 3 to 500 mm$^2$/s, preferably 6 to 200 mm$^2$/s, more preferably 8 to 100 mm$^2$/s, more preferably 3 to 25 mm$^2$/s; and/or a number average molecular weight ($M_n$) of 300 to 10,000 g/mol, preferably 400 to 5,000 g/mol, more preferably 500 to 2,500 g/mol, more preferably 300 to 1,200 g/mol; and/or a carbon number of 25 to 500, preferably 30 to 400, more preferably 40 to 200, more preferably 20 to 100.

In another preferred particular embodiment, the hydrocarbon fluids described herein have a kinematic viscosity at 100 °C of 3 to 100 mm$^2$/s, preferably 4 to 50 mm$^2$/s, more preferably 6 to 25 mm$^2$/s, more preferably 3 to 15 mm$^2$/s; and/or a number average molecular weight ($M_n$) of 300 to 3,000 g/mol, preferably 350 to 2,000 g/mol, more preferably 400 to 1,000 g/mol, more preferably 300 to 800 g/mol; and/or a carbon number of 20 to 200, preferably 25 to 150, more preferably 30 to 100, more preferably 20 to 70.

In a preferred particular embodiment, the hydrocarbon fluid has a pour point of -25 °C or less, preferably between -30 °C and -90 °C, and a kinematic viscosity in the range of from 20 to 5000 mm$^2$/s at 40 °C. In another preferred embodiment, the hydrocarbon fluid has a pour point of -25 °C or less and a number-average molecular weight of 400 g/mol or greater.

Most mineral oils, which typically include functional groups, have a pour point of from 10 °C to -25 °C at the same viscosity and molecular weight ranges.

In another preferred particular embodiment the hydrocarbon fluid has kinematic viscosity at 100 °C of 3 mm$^2$/s or greater, preferably 6 mm$^2$/s or greater, more preferably 8 mm$^2$/s or greater, and one or more of the following properties:

a) a pour point of -10 °C or less, preferably -20 °C or less, preferably -25 °C or less, preferably -30 °C or less, preferably -40 °C or less; and/or,

b) a Viscosity Index of 120 or greater; and/or,

c) a low degree of color, such as typically identified as "water white", "prime white", "standard white", or "bright and clear," preferably an APHA color of 100 or less, preferably 80 or less, preferably 60 or less, preferably 40 or less, preferably 20 or less, preferably 15 or less as determined by ASTM D1209; and/or

d) a flash point of 200 °C or more, preferably 220 °C or more, preferably 240 °C or more; and/or

e) density (15.6 °C) of less than 0.86 g/cm$^3$.

Most mineral oils at the same viscosity range have a pour point greater than -20 °C or an APHA color of greater than 20 or a density (15.6 °C) of 0.86 g/cm$^3$ or more.

In another preferred embodiment, the hydrocarbon fluid has a Viscosity Index of 120 or more and one or more of the following properties:

a) a pour point of -10 °C or less, preferably -20 °C or less, preferably -25 °C or less, preferably -30 °C or less, preferably -40 °C or less; and/or,

b) a kinematic viscosity at 100 °C of 3 mm$^2$/s or greater, preferably 6 mm$^2$/s or greater, preferably 8 mm$^2$/s or greater, preferably 10 mm$^2$/s or greater, preferably 35 mm$^2$/s or greater; and/or,

c) a low degree of color, such as typically identified as "water white", "prime white", "standard white", or "bright and clear," preferably an APHA color of 100 or less, preferably 80 or less, preferably 60 or less, preferably 40 or less, preferably 20 or less, preferably 15 or less, as determined by ASTM D1209; and/or

d) a flash point of 200 °C or more, preferably 220 °C or more, preferably 240 °C or more; and/or

e) a density (15.6 °C) of less than 0.86 g/cm$^3$.

Most mineral oils have a Viscosity Index of less than 120.

In another preferred particular embodiment, the hydrocarbon fluid has a pour point of -20 °C or less, preferably -25 °C or less, more preferably -30 °C or less, and one or more of the following properties:

a) a kinematic viscosity at 100 °C of 3 mm$^2$/s or greater, preferably 6 mm$^2$/s or greater, preferably 8 mm$^2$/s or greater, preferably 10 mm$^2$/s or more, preferably 35 mm$^2$/s or greater; and/or,

b) a Viscosity Index of 120 or greater, preferably 130 or greater; and/or,

c) a low degree of color, such as typically identified as "water white", "prime white", "standard white", or "bright and clear," preferably APHA color of 100 or less, preferably 80 or less, preferably 60 or less, preferably 40 or less, preferably 20 or less, preferably 15 or less as determined by ASTM D1209,

d) a flash point of 200 °C or more, preferably 220 °C or more, more preferably 240 °C or more; and/or

e) a density (15.6 °C) of less than 0.86 g/cm$^3$.

In another preferred embodiment the hydrocarbon fluid has:

a) a kinematic viscosity at 100 °C of 3 mm$^2$/s or more, preferably 6 mm$^2$/s or more, more preferably 8 mm$^2$/s or more, still more preferably 10 mm$^2$/s or more, still more preferably 20 mm$^2$/s or more; and 1000 mm$^2$/s or less, preferably 300 mm$^2$/s or less, more preferably 100 mm$^2$/s or less; and

b) a Viscosity Index of 120 or more, preferably 130 or more, more preferably 140 or more, still more preferably 150 or more, still more preferably 170 or more, still more preferably 200 or more, still more preferably 250 or more; and

c) a pour point of -10 °C or less, preferably -20 °C or less, more preferably -30 °C or less, still more preferably -40 °C or less; and

d) a flash point of 200 °C or more, preferably 220 °C or more, more preferably 240 °C or more, still more preferably between 260 °C and 290 °C.

In another preferred embodiment the hydrocarbon fluid is amorphous as indicated by the absence of a melting peak and a crystallization peak in a DSC heating scan starting at least 20°C below the pour point of the hydrocarbon fluid.

Notwithstanding any of the particular embodiments of the hydrocarbon fluids described herein, the hydrocarbon fluid as described herein may also be characterized by any number of, or any combination of, its parameters described herein.

Exemplary hydrocarbon fluids are commercially available under the trademark of Elevast™ Polymer Modifier from ExxonMobil Chemical Company (Houston TX), some of which are summarized in Table 1 below.

Table 1 Elevast™ Polymer Modifiers

| Grade | KV at 100 °C, mm$^2$/s | VI | Molecular Weight, g/mol | Pour Point, °C | Flash Point, °C | APHA Color | Density, g/cm$^3$ |
|---|---|---|---|---|---|---|---|
| A30 | 4 | 125 | 450 | -60 | 225 | 5 | 0.821 |
| A50 | 6 | 138 | 530 | -57 | 245 | 5 | 0.827 |
| A70 | 8 | 139 | 590 | -51 | 255 | 5 | 0.833 |
| A80 | 10 | 137 | 670 | -48 | 265 | 5 | 0.836 |
| C30 | 40 | 151 | 2200 | -42 | 285 | 12 | 0.849 |
| C70 | 100 | 172 | 3000 | -33 | 290 | 80 | 0.852 |

Most mineral oils have a kinematic viscosity at 100 °C of less than 6 mm$^2$/s, or an APHA color of greater than 20, or a flash point less than 200 °C when their pour point is less than -20 °C.

Characteristics of some commercially available mineral oils marketed as process oils in polymers are listed in Table 2 below.

Table 2 Commercial Examples of Mineral Oils

| Grade | KV at 100 °C, mm$^2$/s | VI | Pour Point, °C | Density, g/cm$^3$ | Flash Point, °C | APHA Color |
|---|---|---|---|---|---|---|
| Drakeol 34[1] | 9 | 99 | -12 | 0.872 | 254 | 10 |
| Paralux 1001R[2] | 4 | 99 | -17 | 0.849 | 212 | 25 |
| Paralux 2401R[2] | 6 | 101 | -12 | 0.863 | 234 | 45 |
| Paralux 6001R[2] | 12 | 102 | -21 | 0.871 | 274 | 45 |
| Sunpar 120[3] | 6 | 106 | -15 | 0.872 | 228 | > 200 |
| Sunpar 150[3] | 11 | 97 | -9 | 0.881 | 245 | > 300 |
| Sunpar 2280[3] | 31 | 95 | -9 | 0.899 | 305 | > 300 |
| Plastol135[4] | 5 | 104 | -9 | 0.865 | 210 | 10 |
| Plastol537[4] | 11 | 97 | -3 | 0.880 | 240 | 10 |
| Plasto12105[4] | 30 | 110 | -15 | 0.885 | 270 | 10 |
| Flexon 843[4] | 5 | 91 | -12 | 0.869 | 218 | > 250 |
| Flexon 865[4] | 11 | 93 | -3 | 0.879 | 252 | > 250 |
| Flexon 815[4] | 32 | 101 | -9 | 0.895 | 310 | > 300 |
| Shellflex 210[5] | 4 | 95 | -18 | 0.860 | 216 | > 200 |
| Shellflex 330[5] | 9 | 95 | -10 | 0.875 | 256 | > 250 |
| Shellflex 810[5] | 33 | 95 | -9 | 0.896 | 324 | > 300 |

1 Available commercially from Penreco.
2 Available commercially from ChevronTexaco.
3 Available commercially from Sunoco.
4 Available commercially from ExxonMobil.
5 Available commercially from Shell.

In another preferred particular embodiment the hydrocarbon fluid has a glass transition temperature (Tg) that cannot be determined by ASTM E1356 or, if it can be determined, then the Tg according to ASTM E1356 is less than 0 °C, preferably less than -10 °C, more preferably less than -20 °C, more preferably less than -30 °C, more preferably less than -40 °C, and, preferably, also has one or more of the following properties:

a) an initial boiling point as determined by ASTM D1160 greater than 300 °C, preferably greater than 350 °C, preferably greater than 400 °C; and/or

b) a pour point of -10 °C or less, preferably -15 °C or less, more preferably -25 °C or less, more preferably -35 °C or less, more preferably -45 °C or less; and/or

c) a density (ASTM D4052, 15.6/15.6 °C) of less than 0.88 g/cm$^3$, preferably less than 0.86 g/cm$^3$, more preferably less than 0.84 g/cm$^3$, more preferably from 0.80 to 0.88 g/cm$^3$, more preferably from 0.82 to 0.86 g/cm$^3$; and/or

d) a final boiling point as determined by ASTM D1160 of from 300 °C to 800 °C, preferably from 400 °C to 700 °C, preferably greater than 500 °C; and/or

e) a weight average molecular weight ($M_w$) between 30,000 and 400 g/mol preferably between 15,000 and 500 g/mol, more preferably between 5,000 and 600 g/mol; and/or

f) a number average molecular weight ($M_n$) between 10,000 and 400 g/mol, preferably between 5,000 and 500 g/mol, more preferably between 2,000 and 600 g/mol; and/or

g) a flash point as measured by ASTM D92 of 200 °C or greater, and/or

h) a dielectric constant at 20 °C of less than 3.0, preferably less than 2.8, more preferably less than 2.5, more preferably less than 2.3, more preferably less than 2.2; and/or

i) a carbon number of from 25 to 800, preferably 30 to 500, preferably 35 to 300.

Molecular weight and carbon number are determined using the methods described in the Test Methods section below.

In one particular embodiment, the hydrocarbon fluid comprises oligomers or polymers of $C_5$- to $C_{14}$-olefins having a kinematic viscosity at 100 °C of 3 mm$^2$/s or more, preferably 6 mm$^2$/s or more, preferably of 8 mm$^2$/s or more, and a Viscosity Index of 120 or more, preferably 130 or more.

Preferably, a combination of hydrocarbon fluids is used were the combination has a kinematic viscosity at 100 °C of 3 mm$^2$/s or more, preferably 6 mm$^2$/s or more, preferably of 8 mm$^2$/s or more, and a Viscosity Index of 120 or more, preferably 130 or more.

In another particular embodiment the hydrocarbon fluid comprises oligomers or polymers of $C_6$- to $C_{14}$-olefins having a Viscosity Index of 120 or more, provided that when the polypropylene composition comprises between 4 and 10 wt% of hydrocarbon fluid that is a hydrogenated, highly branched dimer of an alpha olefin having 8-12 carbon atoms, the composition does not comprise between 18 and 25 wit% of a linear low density polyethylene having a density of 0.912 to 0.935 g/cm$^3$.

In still another particular embodiment the hydrocarbon fluid comprises oligomers or polymers of linear olefins having 6 to 14 carbon atoms, more preferably 8 to 12 carbon atoms, more preferably 10 carbon atoms, where an individual hydrocarbon fluid or a combination of hydrocarbon fluids has a kinematic viscosity at 100 °C of 3 mm$^2$/s or more, preferably 6 mm$^2$/s or more, preferably 8 mm$^2$/s or more (as measured by ASTM D445); and preferably having a Viscosity Index of 100 or more, preferably 110 or more, more preferably 120 or more, more preferably 130 or more, more preferably 140 or more (as determined by ASTM D2270); and having a pour point of -10 °C or less, more preferably -20 °C or less, more preferably -30 °C or less (as determined by ASTM D97).

In still another particular embodiment the hydrocarbon fluid comprises $C_{20}$- to $C_{1500}$-paraffins, preferably $C_{35}$- to $C_{400}$-paraffins, more preferably $C_{40}$- to $C_{250}$-paraffins. The hydrocarbon fluids are dimers, trimers, tetramers, pentamers, etc. of $C_5$- to $C_{14}$-alpha-olefins in one embodiment, and $C_6$- to $C_{14}$-alpha-olefins in another embodiment, and $C_8$- to $C_{12}$-alpha-olefins in another embodiment, and $C_{10}$-alpha-olefins in another embodiment. Suitable olefins include 1-pentene, 1-hexene, 1-heptene, 1-octene, 1-nonene, 1-decene, 1-undecene and 1-dodecene.

In one embodiment, the olefin is 1-decene, and the hydrocarbon fluid is a mixture of dimers, trimers, tetramers and pentamers (and higher) of 1-decene. In another embodiment, the hydrocarbon fluid is comprised of oligomers or polymers of 1-octene, 1-decene, and 1-dodecene.

Preferred hydrocarbon fluids are described more particularly in, for example, US 5,171,908, and US 5,783,531 and in SYNTHETIC LUBRICANTS AND HIGH-PERFORMANCE FUNCTIONAL FLUIDS 1-52 (Leslie R. Rudnick & Ronald L. Shubkin, ed. Marcel Dekker, Inc. 1999).

The hydrocarbon fluid typically possess a number average molecular weight of from 300 to 21,000 g/mol in one embodiment, from 400 to 20,000 g/mol in another embodiment, from 500 to 10,000 g/mol in another embodiment, from 500 to 5,000 g/mol in another embodiment, from 600 to 3,000 g/mol in another embodiment, and from 500 to 1,500 g/mol in yet another embodiment.

Preferred hydrocarbon fluids have kinematic viscosities at 100 °C in the range of 3 to 3000 mm$^2$/s in one embodiment, from 4 to 3000 mm$^2$/s in another embodiment, from 6 to 300 mm$^2$/s in another embodiment, and from 8 to 100 mm$^2$/s in another embodiment.

The hydrocarbon fluids useful in the present invention typically have pour points of less than -10 °C in one embodiment, and less than -20 °C in another embodiment, and less than -30 °C in yet another embodiment.

Preferred hydrocarbon fluids have a carbon number of 20 to 1500, preferably 25 to 1500, preferably 35 to 400, preferably 40 to 250.

In other embodiments the hydrocarbon fluids have a kinematic viscosity at 100 °C of 3 mm$^2$/s or more, preferably 6 mm$^2$/s or more, preferably 8 mm$^2$/s or more, preferably 10 mm$^2$/s or more, preferably 20 mm$^2$/s or more, preferably 300 mm$^2$/s or less, preferably 100 mm$^2$/s or less.

In another embodiment the hydrocarbon fluids have a kinematic viscosity at 100°C of between 3 and 1000 mm$^2$/s, preferably between 6 and 300 mm$^2$/s, preferably between 8 and 100 mm$^2$/s, preferably between 8 and 40 mm$^2$/s.

In other embodiments the hydrocarbon fluids have a Viscosity Index of 120 or more, preferably 130 or more, preferably 140 or more, preferably 150 or more, preferably 170 or more, preferably 200 or more, preferably 250 or more.

In other embodiments the hydrocarbon fluids have a pour point of -10 °C or less, preferably -20 °C or less, preferably -30 °C or less (as determined by ASTM D97).

In other embodiments the hydrocarbon fluids have a flash point of 200 °C or more, preferably 220 °C or more, preferably 240 °C or more, preferably between 260 °C and 290 °C.

In another embodiment, the hydrocarbon fluid is a high purity hydrocarbon fluid with a branched paraffin : normal paraffin ratio ranging from about 0.5:1 to 9:1, preferably from about 1:1 to 4:1. The branched paraffins of the mixture contain greater than 50 wt% (based on the total weight of the branched paraffins) mono-methyl species, for example, 2-methyl, 3-methyl, 4-methyl, 5-methyl or the like, with minimum formation of branches with substituent groups of carbon number greater than 1, such as, for example, ethyl, propyl, butyl or the like; preferably, greater than 70 wt% of the branched paraffins are mono-methyl species.

The paraffin mixture has a number-average carbon number ($C_n$) in the range of 20 to 500, preferably 30 to 400, preferably 40 to 200, preferably 25 to 150, preferably 30 to 100, more preferably 20 to 100, more preferably 20 to 70; has a kinematic viscosity at 100 °C ranging from 3 to 500 mm$^2$/s, preferably 6 to 200 mm$^2$/s, preferably 8 to 100 mm$^2$/s, more preferably 6 to 25 mm$^2$/s, more preferably 3 to 25 mm$^2$/s, more preferably 3 to 15 mm$^2$/s ; and boils within a range of from 100 to 350 °C, preferably within a range of from 110 to 320 °C, preferably within a range of 150 to 300 °C. In a preferred embodiment, the paraffinic mixture is derived from a Fischer-Tropsch process. These branch paraffin/n-paraffin blends are described in, for example, US 5,906,727.

In another particular embodiment, the hydrocarbon fluid comprises paraffinic hydrocarbons having:

a) a number average molecular weight of 300 to 10,000 g/mol, preferably 400 to 5,000 g/mol, preferably 500 to 2,500 g/mol, preferably 300 to 1,200 g/mol;

b) less than 10% of sidechains with 4 or more carbons, preferably less than 8%, preferably less than 5%, preferably less than 3%, preferably less than 2%, preferably less than 1%, preferably less than 0.5%, preferably less than 0.1 %;

c) at least 15% of sidechains with 1 or 2 carbons, preferably 20% or more, preferably 25% or more, preferably 30% or more, preferably 35% or more, preferably 40% or more, preferably 45% or more, preferably 50% or more;

d) less than 2.5 wt% cyclic paraffins (based on the total weight of paraffins in the mixture), preferably less than 2 wt%, preferably less than 1 wt%, preferably less than 0.5 wt%, preferably less than 0.1 wt%, preferably at less than 0.1 wt%, preferably at 0.001 wt%;

e) a kinematic viscosity at 100°C of 3 mm$^2$/s or more, preferably 6 mm$^2$/s or more, preferably 8 mm$^2$/s or more, preferably between 3 and 25 mm$^2$/s; and

f) a viscosity index (VI) of 110 or more, preferably 120 or more, preferably 130 or more, preferably 140 or more, preferably 150 or more, preferably 180 or more, preferably 200 or more, preferably 250 or more, preferably 300 or more; and

g) a pour point of -10 °C or less; and

h) a flash point of 200 °C or more.

In another particular embodiment, the hydrocarbon fluid comprises a wax isomerate lubricant oil basestock, which includes hydroisomerized waxy stocks (e.g. waxy stocks such as gas oils, slack waxes, fuels hydrocracker bottoms, etc.), hydroisomerized Fischer-Tropsch hydrocarbons and waxes, Gas-to-Liquids (GTL) base stocks and base oils, and other waxy feedstock derived hydroisomerized base stocks and base oils, or mixtures thereof. Fischer-Tropsch waxes, the high boiling point residues of Fischer-Tropsch synthesis, are highly paraffinic hydrocarbons with very low sulfur content, and are often preferred feedstocks in processes to make hydrocarbon fluids of lubricating viscosity.

The hydroprocessing used for the production of such base stocks may use an amorphous hydrocracking/ hydroisomerization catalyst, such as one of the specialized lube hydrocracking catalysts or a crystalline hydrocracking/ hydroisomerization catalyst, preferably a zeolitic catalyst. For example, one useful catalyst is ZSM-48 as described in U.S. Patent 5,075,269. Processes for making hydrocracked/hydroisomerized distillates and hydrocracked/hydroisomerized waxes are described, for example, in U.S. Patents Nos. 2,817,693; 4,975,177; 4,921,594 and 4,897,178 as well as in British Patent Nos. 1,429,494; 1,350,257; 1,440,230 and 1,390,359. Particularly favorable processes are described in European Patent Application Nos. 464546 and 464547. Processes using Fischer-Tropsch wax feeds are described in US 4,594,172 and 4,943,672.

Gas-to-Liquids (GTL) base stocks and base oils, Fischer-Tropsch hydrocarbon derived base stocks and base oils, and other waxy feedstock derived base stocks and base oils (or wax isomerates) that can be advantageously used as hydrocarbon fluid in the present invention have a kinematic viscosities at 100 °C of about 3 $mm^2$/s to about 500 $mm^2$/s, preferably about 6 $mm^2$/s to about 200 $mm^2$/s, more preferably about 8 $mm^2$/s to about 100 $mm^2$/s, more preferably about 3 $mm^2$/s to about 25 $mm^2$/s.

These Gas-to-Liquids (GTL) base stocks and base oils, Fischer-Tropsch hydrocarbon derived base stocks and base oils, and other waxy feedstock derived base stocks and base oils (or wax isomerates) have pour points of preferably less than -10 °C, more preferably -15 °C or lower, more preferably -25 °C or lower, more preferably -30 °C to about -40 °C or lower; have a high viscosity index, preferably 110 or greater, more preferably 120 or greater, more preferably 130 or greater, more preferably 150 or greater; and are typically of high purity, i.e. have high saturates levels, low-to-nil sulfur content, low-to-nil nitrogen content, low-to-nil aromatics content, low bromine number, low iodine number, and high aniline point.

Useful compositions of Gas-to-Liquids (GTL) base stocks and base oils, Fischer-Tropsch hydrocarbon derived base stocks and base oils, and wax isomerate hydroisomerized base stocks and base oils are recited in U.S. Patent Nos. 6,080,301; 6,090,989, and 6,165,949 for example, and are incorporated herein in their entirety by reference.

In a preferred particular embodiment, the hydrocarbon fluid comprises a GTL-derived base-stock or base-oil that has a kinematic viscosity at 100°C of 3 to 500 $mm^2$/s, preferably 6 to 200 $mm^2$/s, preferably 8 to 100 $mm^2$/s, more preferably 3 to 25 $mm^2$/s; and/or a number average molecular weight ($M_n$) of 300 to 10,000 g/mol, preferably 400 to 5,000 g/mol, preferably 500 to 2,500 g/mol, more preferably 300 to 1,200 g/mol; and/or a carbon number of 20 to 500, preferably 30 to 400, more preferably 40 to 200, more preferably 20 to 100.

In another particular embodiment, the hydrocarbon fluid comprises a Group III hydrocarbon basestock. Preferably the hydrocarbon fluid comprises a severely hydrotreated mineral oil having a saturates levels of 90 % or more, preferably 92 % or more, preferably 94 % or more, preferably 95 % or more, and sulfur contents less than 0.03 %, preferably between 0.001 and 0.01 %, and VI is in excess of 120, preferably 130 or more. Preferably, the Group III hydrocarbon base stock has a kinematic viscosity at 100 °C of 3 to 100, preferably 4 to 100 $mm^2$/s, preferably 6 to 50 $mm^2$/s, preferably 8 to 20 $mm^2$/s; and/or a number average molecular weight of 300 to 5,000, preferably 400 to 2,000, more preferably 500 to 1,000; and/or a carbon number of 20 to 400, preferably 25 to 400, more preferably 35 to 150, more preferably 40 to 100. Preferably the Group III hydrocarbon basestock has a pour point of -10 °C or less, and a flash point of 200 °C or more. Preferably, the hydrocarbon fluid has a VI of 120 or more, a flash point greater than 200 °C and (1) a pour point of -25 °C or less or (2) a kinematic viscosity at 100 °C of 35 $mm^2$/s or more.

Preferably, the hydrocarbon fluid is not an oligomer or polymer of $C_4$-olefin(s) (including all isomers, e.g. n-butene, 2-butene, isobutylene, and butadiene, and mixtures thereof). Such materials, which are referred to as "polybutene" liquids (or "polybutenes") when the oligomers comprise isobutylene and/or 1-butene and/or 2-butene, are commonly used as additives for polyolefins; e.g. to introduce tack or as a processing aid. The ratio of $C_4$-olefin isomers can vary by manufacturer and by grade, and the material may or may not be hydrogenated after synthesis. Commercial sources of polybutenes include BP (Indopol grades) and Infineum (C-Series grades). When the $C_4$-olefin is exclusively isobutylene, the material is referred to as "polyisobutylene" or PIB. Commercial sources of PIB include Texas Petrochemical (TPC Enhanced PIB grades), Ineos Oligomers (Indopol™), and Infineum (C-Series PIB grades). When the $C_4$-olefin is exclusively 1-butene, the material is referred to as "poly-n-butene" or PNB.

Preferably, the hydrocarbon fluid is not an oligomer or polymer of $C_4$-olefin(s); however, an oligomer or polymer of $C_4$-olefin(s) (including all isomers, e.g. n-butene, 2-butene, isobutylene, and butadiene, and mixtures thereof) may be present in the hydrocarbon fluid. Then, in a preferred embodiment, the hydrocarbon fluid comprises less than 50 wt%, preferably less than 40 wt%, more preferably less than 30 wt%, more preferably less than 20 wt%, more preferably less than 10 wt%, more preferably less than 5 wt%, more preferably less than 1 wt%, and most preferably 0 wt% polymer or oligomer of $C_4$-olefin(s) such as PIB, polybutene, or PNB, based upon the weight of the composition.

In a preferred embodiment, the hydrocarbon fluid contains less than 50 wt% of $C_4$-olefin(s), preferably isobutylene, based upon the weight of the hydrocarbon fluid. Preferably, the hydrocarbon fluid contains less than 45 wt%, more preferably less than 40 wt%, more preferably less than 35 wt%, more preferably less than 30 wt%, more preferably less than 25 wt%, more preferably less than 20 wt%, more preferably less than 15 wt%, more preferably less than 10 wt%, more preferably 5 wt%, more preferably less than 4 wt%, more preferably less than 3 wt%, more preferably less than 2 wt%, more preferably less than 1 wt%, more preferably less than 0.5 wt%, more preferably less than 0.25 wt% of $C_4$-olefin (s), preferably isobutylene, based upon the weight of the hydrocarbon fluid.

The polyolefin composition according to the invention may further contain various additives, such as miscible thermoplastics, antioxidants, UV-stabilizers, lubricants, demolding agents, nucleating agents, fillers, colouring agents, and foaming agents which can be added to the composition before, during or after the mixing in an amount of up to 40 wt%, preferably up to 30 wt% based on the total polymer composition.

The polyolefin compositions can be produced by any suitable melt mixing process at temperatures above the melting point of the respective multiphase propylene copolymer. Typical devices for performing said melt mixing process are twin screw extruders, single screw extruders optionally combined with static mixers, chamber kneaders like Farell kneaders and reciprocating co-kneaders like Buss co-kneaders. Preferably, the melt mixing process is carried out in a twin screw extruder with high intensity mixing segments and preferably at a temperature of 170 to 270 °C, more preferably of 180 to 250 °C.

For said melt mixing process, the multiphase propylene copolymer can be added in the form of powder as resulting directly from a polymerization process or in the form of granules from a prior melt mixing operation. The hydrocarbon fluid can be combined with the multiphase propylene copolymer either before the melt mixing process in a suitable device like a high-speed mixer, or it can be fed to the melt mixing device with a suitable feed port for fluids of low to medium viscosity.

The present invention furthermore relates in a first embodiment to a polymer film comprising a polyolefin composition and having a haze of less than 30 %, preferably less than 20 %, at 100 μm film thickness both before and after a steam sterilization step at a temperature of 121 °C or higher for 30 minutes.

Details of the steam sterilization step are further described below. Particularly, said steam sterilization is usually carried out at a temperature of below 170 °C. Particularly, said steam sterilization is usually carried out not longer than 2 hours.

Furthermore, the invention in a second embodiment relates to a polymer film which comprises the polyolefin composition comprising

(A) 81 to 99 wt% of a multiphase propylene copolymer having at least one glass transition temperature determined by DMTA, and

(B) 1 to 19 wt% of a hydrocarbon fluid capable of lowering said at least one glass transition temperature of said multiphase propylene copolymer,

wherein said multiphase propylene copolymer comprises an elastomer determined as the fraction soluble in cold xylene (XS) in an amount of from 5 to 30 wt% of the multiphase propylene copolymer, and

wherein said fraction has an intrinsic viscosity in the range of 0.5 to 4.5 dl/g,

in any of the above described embodiments.

Preferably, the film of the second embodiment has a haze of less than 30 %, preferably less than 20 %, at 100 μm film thickness both before and after a steam sterilization step at a temperature of 121 °C or higher for 30 minutes.

The difference in haze (Δ Haze) is calculated by subtracting the value of haze before the step of steam sterilization from the value of haze after the step of steam sterilization.

Preferably, the difference in haze of a film of the first or second embodiment is not higher than 5 %, preferably not higher than 4 %, when applying a steam sterilization step at a temperature of 121 °C or higher for 30 minutes.

Furthermore, the invention in a third embodiment relates to a polymer film according to the first or the third embodiment which has been treated with a steam sterilization step at a temperature of above 110 °C.

Preferably, said step of steam sterilization is carried out at a temperature of 121 °C or higher.

Preferably, said step of steam sterilization is carried out for at least 5 minutes, more preferably at least 10 minutes, more preferably at least 20 minutes, still more preferably at least 30 minutes.

In the following, preferred embodiments for all film embodiments are described.

The polymer film preferably does not exhibit surface tack after a steam sterilization step at a temperature of 121 °C or higher for 30 minutes.

Preferably, the polymer film is a multilayer film and comprises two layers forming the outer layers of said multilayer film, said outer layers comprising one or more polyolefins.

The practical applicability of the inventive polymer films suitable for applications requiring a heat or steam sterilization step above a temperature of 110 °C can be further increased by a multilayer construction.

A typical multilayer construction can be a three-layer construction like A - B - C in which, preferably, the core layer B is made up from the polyolefin composition in any of the embodiments as described above.

The two outer layers of such a three-layer construction, A and C, are normally characterized by a thickness being significantly lower than the thickness of the core layer B. The polymer materials comprised in the outer layers A and C can be identical or different.

Preferably and to ensure good layer adhesion, the polymers comprised in the outer layers A and C are one or more polyolefins.

Examples for suitable manufacturing processes for the inventive polymer films, in which both monolayer and multilayer films comprising at least one layer consisting of the polyolefin composition as described above can be manufactured, are cast film processes and blown film processes.

For increasing mechanical strength and transparency the films can be further oriented after the actual manufacturing process by uni- or bidirectional stretching.

In the cast film process, the molten polymer is extruded through a slot die fed by a (normally single-screw) extruder onto a first cooled roll, the so-called chill-roll. From this roll, the already solidified film is taken up by a second roll (nip roll or take-up roll) and transported to a winding device after trimming the edges. The temperature of the chill roll is normally set in the range from 0 to 70 °C, preferably from 10 to 40 °C, to obtain films of high clarity.

In the formation of air-quenched blown films, the polymer melt enters a ring-shaped die either through the bottom or side thereof. The melt is forced through spiral grooves around the surface of a mandrel inside the die and extruded through the die opening as a thick-walled tube. The tube is expanded into a bubble of desired diameter and correspondingly decreased thickness using at least a 1.5 blow up ratio, preferably at least a 2.0 blow up ratio, more preferably at least a 2.5 blow up ratio. The mode of cooling is often advantageously modified because the art recognizes that polypropylene cools and crystallizes at a rate different from that of polyethylene.

The present invention thus furthermore relates to the use of a polyolefin composition in any embodiment as described hereinbefore for the production of a polymer film in any embodiment as described hereinbefore and according to any process as described hereinbefore.

The inventive polymer films can further be used for manufacturing articles such as pouches or bags by appropriate cutting, folding, welding and sealing operations. The resulting articles such as pouches or bags can be sterilized before or after filling and for example used for packaging food, medications or medical equipment.

The present invention thus furthermore relates to the use of the polymer film in any embodiment as described hereinbefore for the production of an article, in particular a pouch or bag.

Still further, the invention relates to an article, more preferably to a pouch or bag, comprising a polymer film in any embodiment as described hereinbefore.

Preferably, the article is designed for an application or use in which it is submitted to a sterilization treatment above 110 °C.

The present invention furthermore relates to the use of a hydrocarbon fluid in any embodiment as described hereinbefore in a polyolefin composition comprising a multiphase propylene copolymer in any embodiment as described hereinbefore for improved retaining of transparency of a sterilized film comprising the composition.

Preferably, said sterilization is a steam sterilization step carried out at a temperature of 121 °C or higher for 30 minutes.

Preferably, said improved retention of transparency is shown by a haze of less than 30 % at 100 $\mu$m film thickness both before and after a steam sterilization step at a temperature of 121 °C for 30 minutes.

Preferably, said improved retention of transparency is shown by a difference in haze which is not higher than 5 %, preferably not higher than 4 %, when applying a steam sterilization step at a temperature of 121 °C for 30 minutes.

The present invention will now be further illustrated by means of the following examples.

**Test Methods**

**1. Polymer Testing**

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg, the $MFR_5$ of polyethylene is measured at a temperature 190 °C and a load of 5 kg and the $MFR_2$ of polyethylene at a temperature 190 °C and a load of 2.16 kg.

b) Density

For polymers, the density is measured according to ISO 1183 on compression molded specimens.

c) DSC

For determining the melting points $T_m$ of polymers, DSC is run according to ISO 3146 / part 3 / method C2 in a heat / cool / heat cycle with a scan rate of 10 °C/min in the temperature range of +23 °C to +210 °C. The melting temperature and enthalpy are determined from the second heating step.

d) DMTA

The glass transition points Tg of the polymers are measured using dynamic-mechanical analysis according to ISO 6721-7 on compression molded specimens of 1 mm thickness in the temperature range from -110 °C to +160 °C at a heating rate of 2 °C/min.

e) Cold Xylene solubles (XS) content

For the determination of the XS fraction, 2.0 g of polymer is dissolved in 250 ml of p-xylene at 135 °C under stirring. After 30 $\pm$ 2 min the solution is allowed to cool for 5 min at ambient temperature and then allowed to settle for 30 min at 23 $\pm$ 0.5 °C. The solution is filtered with a paper filter into two 100 ml flasks. The solution in the first 100 ml flask is evaporated in nitrogen flow and the residue is dried under vacuum at 90 °C until constant weight is reached. The xylene soluble (XS) fraction is then calculated using the following equation:

$$XS\ [\%] = (100 m_1 v_0)/(m_0 v_1)$$

wherein $m_0$ is the initial polymer amount [g], $m_1$ is the weight of the residue [g], $v_0$ is the initial volume [ml] and $V_1$ the volume of the analysed sample [ml].

f) Intrinsic viscosity of Cold Xylene Solubles

Intrinsic viscosity of the cold xylene solubles fraction is measured according to DIN ISO 1628/1, October 1999 (in Decalin at 135 °C).

**2. Fluid Testing**

a) Pour Point

Pour Point is measured by ASTM D97.

b) Kinematic Viscosity

Kinematic Viscosity (KV) is measured by ASTM D445.

c) Viscosity Index

Viscosity index (VI) is determined by ASTM D2270.

d) Color (APHA scale)

Color (APHA scale) is determined by ASTM D1209.

e) Density

Density is determined by ASTM D4052.

f) Flash Point

Flash point is determined by ASTM D92.

g) Saturates Content

Saturates content (wt%) is determined according to ASTM D2007.

h) Sulfur Content

Sulfur content (wt%) is determined according to ASTM D2622.

i) Glass Transition Temperature

Glass transition temperature of the hydrocarbon fluids is determined according to ASTM E1356.

j) Molecular Weight Properties

The number average molecular weight ($M_n$) is determined by one of two methods: 1. For hydrocarbon fluids having a kinematic viscosity at 100 °C of 10 $mm^2$/s or less use Gas Chromatography (GC) with a mass spectrometer detector, as generally described in Modern Practice of Gas Chromatography, 3rd Ed., R. L. Grob and E. F. Barry (Wiley-Interscience, 1995); or 2. For hydrocarbon fluids having a kinematic viscosity at 100 °C of more than 10 $mm^2$/s use Gel Permeation Chromatography (GPC), as generally described in Modern Size Exclusion Liquid Chromatographs, W. W. Yan, J. J. Kirkland, and D. D. Bly, (J. Wiley & Sons, 1979), calibrated using polystyrene standards.

k) Carbon Number

**[0183]** The number-average carbon number ($C_n$) is calculated from $M_n$ by $C_n = (M_n - 2)/14$.

### 3. Film Testing

a) Haze and Clarity

All optical parameters were measured on 100 $\mu$m thick cast films. Haze and clarity were determined according to ASTM D 1003/92. A Haze was determined according to ASTM D 1003 by measuring the haze value before and after sterilization at 121 °C for 30 min and calculating the difference between these values.

b) Tensile modulus

Tensile tests according to ISO 527 at a temperature of 23 °C were carried out on 10 mm wide strips cut in machine direction from 100 $\mu$m thick cast films.

c) impact strength of films (Dynatest) at +23 °C

The impact strength of films is determined according to ISO 7725-2 on monolayer cast films with a thickness of 100 $\mu$m. The value "$W_{break}$" [J/mm] represents the total energy per mm thickness that a film can absorb before it breaks. The higher this value, the tougher the material is.

d) Sterilization Step

The sterilization is done by subjecting the films to saturated steam of 121 °C for 30 minutes. In order to avoid the films sticking together after the process, the film samples are fixed in frames during the sterilization process.

e) Surface Tack

The surface tack of films is determined manually and valued according to experience. "No tack" means a complete absence of adhesion when touching the film with dry fingers at ambient temperature (+23 °C).

**Examples**

Polyolefin compositions using the following materials where produced as defined further below.

- Polymer PP-VP 1599/1

- Hydrocarbon fluid ELEVAST™ C30 Polymer Modifier, an inventive hydrocarbon fluid with properties that fall within the description disclosed herein and summarized in Table 1.

- Acid scavenger calcium stearate (Calcium Stearate SP distributed by Faci, Italy)

- Stabilizer mixture Irganox B215 (distributed by CIBA Specialty Chemicals, Switzerland)

**Preparation of PP-VP 159911**

a) Preparation of a soluble Mg complex

A magnesium complex solution is prepared by adding, with stirring, 78.0 kg of a 20% solution in toluene of BOMAG ($Mg(Bu)_{1.5}(Oct)_{0.5}$) to 27.0 kg of 2-ethylhexanol in a 150 L steel reactor. During the addition the reactor content is maintained below 40 °C. After 30 minutes of stirring, at which time the reaction is completed, 7.8 kg of 1,2 phtaloyl dichloride are added. After addition, stirring of the reaction mixture is continued for 60 minutes. After cooling to room temperature a clear yellowish solution is obtained.

b) Catalyst synthesis

24.0 kg of titanium tetrachloride are placed in a 90 L steel reactor. 21.0 kg of the Mg-complex are then added to the stirred reaction mixture over a period of 2 hours. During the addition of the Mg complex the reactor content is kept below 35 °C.

4.5 kg n-heptane and 1.05 L Viscoplex 1-254 of RohMax Additives GmbH (a polyalkyl methacrylate with a viscosity at 100 °C of 90 $mm^2$/s and a density at 15 °C of 0.90 $g/cm^3$) are then added to the reaction mixture at room temperature and stirring is maintained at that temperature for further 60 minutes.

The temperature of the reaction mixture is then raised to 90 °C over a period of 60 minutes and held at that level for 40 minutes with stirring. After settling and syphoning the solids undergo washing with a mixture of 0.244 L of a 30% solution in toluene of diethyl aluminium chloride and 50 kg toluene for 110 minutes at 90 °C, 50 kg n-heptane for 50 minutes at 50 °C, and 50 kg n-heptane for 50 minutes at 25 °C. The synthesis is carried out under inert conditions using about one bar over pressure. Finally, 4.0 kg white oil (Primol 352; viscosity at 100 °C of 8.5 $mm^2$/s; density at 15 °C of 0.87 $g/cm^3$) is added to the reactor. The obtained oil slurry is stirred for further 5 minutes at room temperature before the product is transferred to a storage container.

From the oil slurry a solids content of 22.2 wt% is analysed. The solid catalyst contains 0.23 wt% aluminium, 15.4 wt% magnesium, 4.5 wt% titanium and 24.5 wt% DOP.

c) Preparation of PP-VP 1599/1

The heterophasic propylene copolymer (A) is produced in a plant having a prepolymerisation reactor, a loop reactor and two fluid-bed gas phase reactors connected in series. The catalyst as described above, triethylaluminium (TEA) as the cocatalyst and dicyclopently dimethoxy silane (Donor D) as an external donor are used.

After a first pre-polymerisation step the modified catalyst is fed to the slurry reactor, where the polymerisation of the polypropylene homopolymer of the matrix phase is initiated. The slurry phase loop reactor is then followed by a first gas phase reactor in series, in which the copolymer part of the matrix phase is made. The polymerisation temperature in the slurry phase loop reactor is 75.0 °C, in the first gas phase reactor 80.0 °C. After transfer to a second gas phase reactor, the dispersed elastomeric rubber phase is produced by copolymerisation of propylene with ethylene monomer. The operating temperature in the second gas phase reactor is 70 °C.

The split between loop / 1st GPR / 2nd GPR is 47% / 42% / 11 %.

The heterophasic propylene copolymer (A) contains a unimodal rubber.

d) Reaction conditions

Prepolymerisation:
T [°C]                30

(continued)

| | |
|---|---|
| TEA/Donor [mol/mol] | 8 |
| TEA/Ti [mol/mol] | 60 |
| TEA/$C_3$ [g/kg] | 0.18 |

Loop reactor:

| | |
|---|---|
| T[°C] | 75 |
| Pressure [barg] | 55 |
| Density [kg/m$^3$] | 515 |
| $H_2$/$C_3$ [mol/kmol] | 1.2 |
| XCS [wt%] | 2.1 |

1$^{st}$ Gas phase reactor:

| | |
|---|---|
| T [°C] | 85 |
| Pressure [barg] | 22 |
| $H_2$/$C_3$ [mol/kmol] | 12 |
| $C_2$/$C_3$ [mol/kmol] | 23 |
| XCS (loop+1st GPR) [wt%] | 7.0 |
| IV (loop + 1$^{st}$ GPR) [dl/g] | 2.9 |
| $C_2$ (loop + 1$^{st}$ GPR) [wt%] | 2.0 |
| MFR$_2$ (loop + 1$^{st}$ GPR) [g/10min] | 2.2 |

2$^{nd}$ Gas phase reactor:

| | |
|---|---|
| T [°C] | 75 |
| Pressure [barg] | 22 |
| H2/C3 [mol/kmol] | 450 |
| C2/C3 [mol/kmol] | 250 |
| XCS (total) [wt%] | 13.3 |
| IV (XCS - total) [dl/g] | 1.7 |
| C2 (total) [wt%] | 4.3 |
| MFR (2,16/230) (total) [g/10min] | 2.3 |

Table 3 Properties of the heterophasic propylene copolymer (HECO)

| | | Matrix (1. fr) | Matrix (2. fr) | Matrix (total) | XCS (total) | Total PP |
|---|---|---|---|---|---|---|
| Type | | PP-homo | PP-copo | PP-copo | - | HECO |
| propylene | [wt.-%] | 100 | 95.6 | 98 | 64 | 95.7 |
| ethylene | [wt.-%] | 0 | 4.4 | 2 | 36 | 4.3 |
| XCS | [wt.-%] | 2.1 | - | 7.0 | - | 13.3 |
| IV | [dl/g] | - | - | 2.9* | 1.73** | - |
| MFR$_2$ (230 °C) | [g/10min] | 2.0 | - | 2.2 | - | 2.3 |

(continued)

|  | | Matrix (1. fr) | Matrix (2. fr) | Matrix (total) | XCS (total) | Total PP |
|---|---|---|---|---|---|---|
| T$_m$ | [°C] | - | - | - | - | 164 |

fr: fraction
PP-homo: propylene homopolymer
PP-copo: random propylene ethylene copolymer
HECO: heterophasic propylene copolymer
XCS (total): xylene cold soluble fraction of HECO
\*: intrinsic viscosity of the xylene cold insoluble fraction
\*\*:intrinsic viscosity of the xylene cold soluble fraction

Polyolefin compositions as detailed in Table 4 were produced by melt mixing on a Thermo Prism TSE24 twin screw extruder (screw diameter 24 mm, L/D ratio 40) with two high intensity mixing segments at temperatures between 190 °C and 240 °C at a throughput of 10 kg/h and a screw speed of 50 rpm. The propylene copolymer and the additive mixture were fed gravimetrically through the main hopper, while the hydrocarbon fluid was fed through a downstream fluid feedport with volumetric dosing located before the first mixing segment. The material was extruded to two circular dies of 3 mm diameter into a water bath for strand solidification and then pelletized and dried.

Table 4 Components of polyolefin compositions in wt% and properties.

|  | Example 1 | Example 2 | Example 3 | Example 4 | Comp.Ex. 1 | Comp.Ex. 2 |
|---|---|---|---|---|---|---|
| PP-VP 1599/1 | 97.7 | 94.7 | 91.7 | 89.7 | 99.7 | 79.7 |
| ELEVAST™ C30 PM | 2.0 | 5.0 | 8.0 | 10.0 | 0.0 | 20.0 |
| Ca stearate | 0.1 | 0.1 | 0.1 | 0.1 | 0.1 | 0.1 |
| Irganox B215 | 0.2 | 0.2 | 0.2 | 0.2 | 0.2 | 0.2 |
| MFR$_2$ / g/10min | 2.6 | 2.8 | 3.3 | 3.4 | 2.5 | 6.5 |
| T$_m$ /°C | 163 | 162 | 161 | 160 | 164 | 158 |
| T$_9$(PP) /°C | 0 | -2 | -3 | -5 | 2 | -12 |
| T$_9$(EPR) /°C | -56 | -57 | -60 | -61 | -55 | -64 |

T$_g$(EPR) denotes the glass transition temperature of the ethylene-propylene-rubber part of the multiphase propylene copolymer.
T$_g$(PP) denotes the glass transition temperature of the matrix phase.

From the materials of Table 4, cast films were produced on a single screw extruder with a barrel diameter of 30 mm and a slit die of 200 x 0.5 mm in combination with a chill- and take-up roll. Melt temperature was 260 °C in the die. The chill roll and the take-up roll were kept at 15 °C. Film thicknesses of 50 $\mu$m and 80 $\mu$m were adjusted by varying the ratio between the extruder output and take-off speed.
While one part of the film was used for primary testing of mechanics and optics, another part was subjected to a steam sterilization step at 121 °C for 30 minutes. All results of the mechanical and optical characterization are summarized in Table 5.

Table 5

|  | Example 1 | Example 2 | Example 3 | Example 4 | Comp.Ex. 1 | Comp.Ex. 2 |
|---|---|---|---|---|---|---|
| Before steriliz. Tensile mod. /MPa | 564 | 477 | 421 | 364 | 624 | 307 |
| W(break) /J/mm | 29.7 | 38.3 | 40.5 | 47.5 | 24.8 | 48.3 |

(continued)

| | Example 1 | Example 2 | Example 3 | Example 4 | Comp.Ex. 1 | Comp.Ex. 2 |
|---|---|---|---|---|---|---|
| Haze 1% | 13.4 | 13.9 | 16.5 | 20.5 | 11.8 | 22.7 |
| Clarity 1% | 67.9 | 70.2 | 72.3 | 75.2 | 69.5 | 71.3 |
| After steriliz. | | | | | | |
| Tensile mod. /MPa | - | 936 | - | 697 | 1252 | - |
| W(break) /J/mm | - | 12.2 | - | 16.9 | 7.3 | - |
| Haze 1% | 16.5 | 17.3 | 18.7 | 19.9 | 17.5 | 37.9 |
| Clarity 1% | 66.5 | 68.4 | 69.8 | 72.6 | 68.3 | 67.2 |
| Surface tack | no | no | no | no | no | yes |
| $\Delta$ Haze | 3.1 | 3.4 | 2.2 | -0.6 | 5.7 | 15.2 |

**Claims**

1.  A polyolefin composition comprising

    (A) 85 to 99 wt% of a multiphase propylene copolymer having at least one glass transition temperature determined by DMTA, and
    (B) 1 to 15 wt% of a hydrocarbon fluid capable of lowering said at least one glass transition temperature of said multiphase propylene copolymer,
    wherein said multiphase propylene copolymer comprises an elastomer determined as the fraction soluble in cold xylene (XCS) in an amount of from 5 to 30 wt% of the multiphase propylene copolymer, and
    wherein said fraction soluble in cold xylene (XCS) has an intrinsic viscosity in the range of 0.5 to 4.5 dl/g.

2.  Polyolefin composition according to claim 1, wherein the polyolefin composition has a melting point according to DSC above 148 °C.

3.  Polyolefin composition according to claims 1 or 2, wherein the multiphase propylene copolymer has at least two glass transition temperatures determined by DMTA, with one being in the range from -10 °C to +5 °C, and a second one being in the range below -20 °C.

4.  Polyolefin composition according to any one of claims 1 to 3, wherein the fraction soluble in cold xylene (XS) is from 8 to 25 wt% of the multiphase propylene copolymer.

5.  Polyolefin composition according to any of one of the preceding claims, wherein the hydrocarbon fluid has a viscosity index VI of 120 or more.

6.  Polyolefin composition according to any of one of the preceding claims, wherein the hydrocarbon fluid has a kinematic viscosity at 100 °C of 3 to 3000 $mm^2$/s.

7.  Polyolefin composition according to any of one of the preceding claims, wherein the hydrocarbon fluid has a density of 0.87 $g/cm^3$ or less.

8.  Polyolefin composition according to any one of the preceding claims, wherein the amount of the hydrocarbon fluid in the polyolefin composition is from 2 to 15 wt%.

9.  A polymer film comprising a polyolefin composition and having a haze of less than 30 % at 100 $\mu$m film thickness both before and after a steam sterilization step at a temperature of 121 °C for 30 minutes.

10. A polymer film which comprises a polyolefin composition according to any one of claims 1 to 8.

11. Polymer film according to claims 9 or 10, which has been treated with a steam sterilization step at temperatures of above 110 °C.

12. An article comprising a polymer film according to any one of claims 9 to 11.

13. Use of a hydrocarbon fluid in a polyolefin composition comprising a multiphase propylene copolymer for improved retaining of transparency of a sterilized film comprising the composition.

14. Use of a polyolefin composition according to any one of claims 1 to 8 for the production of a polymer film.

15. Use of a polymer film according to any one of claims 9 to 11 for the production of an article.

Europäisches
Patentamt

European
Patent Office

Office européen
des brevets

# EUROPEAN SEARCH REPORT

Application Number

EP 09 01 5652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 022 824 A1 (BOREALIS TECH OY [FI]) 11 February 2009 (2009-02-11)<br><br>* claims 1,3,6-14 *<br>* page 10, paragraph 100 - page 11, paragraph 105 *<br>* page 2, paragraphs 1,2,9,10 - page 4 *<br>----- | 1-8, 10-12, 14,15 | INV.<br>C08J5/18<br>C08L23/14<br>C08L23/16<br>C08K5/01<br>C08L23/10 |
| Y | WO 2004/060994 A1 (EXXONMOBIL CHEM PATENTS INC [US]; TSOU ANDY H [US]; SRINIVAS SRIVATSAN) 22 July 2004 (2004-07-22)<br>* page 13, paragraph 40 - page 14, paragraph 44 *<br>* page 4, paragraph 12 *<br>----- | 1-8, 10-12, 14,15 | |
| Y | US 2005/107534 A1 (DATTA SUDHIN [US] ET AL DATTA SUDHIN [US] ET AL) 19 May 2005 (2005-05-19)<br>* paragraphs [0002], [0051] - [0053], [0060], [0087], [0088], [0097] *<br>----- | 1-8,10, 12,14,15 | |
| Y | WO 2006/113132 A1 (EXXONMOBIL CHEM PATENTS INC [US]; DATTA SUDHIN [US]; HU WEIGUO [US]; K) 26 October 2006 (2006-10-26)<br>* page 1, paragraph 1-3 *<br>* paragraphs [0019], [0042] - [0048], [0057], [0068], [0072] *<br>* claim 1 *<br>----- | 1-8, 10-12, 14,15 | TECHNICAL FIELDS SEARCHED (IPC)<br><br>C08J<br>C08L<br>C08K |
| A | US 2006/293460 A1 (JACOB SUNNY [US] ET AL) 28 December 2006 (2006-12-28)<br><br>* claims 2,19 *<br>* paragraphs [0044], [0150], [0151] *<br>* page 18 - page 19; examples 1,2; tables 1B,2B *<br>----- | 1-8, 10-12, 14,15 | |

-/--

~~The present search report has been drawn up for all claims~~

| Place of search | Date of completion of the search | Examiner |
|---|---|---|
| Munich | 9 September 2010 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 01 5652

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 058 340 A1 (BOREALIS TECH OY [FI]) 13 May 2009 (2009-05-13) <br><br> * the whole document * <br> ----- | 1-8, 10-12, 14,15 | |
| A | EP 1 892 264 A1 (BOREALIS TECH OY [FI]) 27 February 2008 (2008-02-27) <br><br> * the whole document * <br> ----- | 1-8, 10-12, 14,15 | |
| | | | **TECHNICAL FIELDS SEARCHED** (IPC) |

~~The present search report has been drawn up for all claims~~

| Place of search | Date of completion of the search | Examiner |
|---|---|---|
| Munich | 9 September 2010 | Lippert, Sigrid |

EPO FORM 1503 03.82 (P04C01)

Europäisches
Patentamt

European
Patent Office

Office européen
des brevets

**Application Number**

EP 09 01 5652

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

    see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

    see sheet B

☐ The present supplementary European search report has been drawn up for those parts of the European patent application which relate to the invention first mentioned in the claims (Rule 164 (1) EPC).

EP 2 390 279 A1

Europäisches
Patentamt
European
Patent Office
Office européen
des brevets

**LACK OF UNITY OF INVENTION**
**SHEET B**

Application Number

EP 09 01 5652

The Search Division considers that the present European patent application does not comply with the
requirements of unity of invention and relates to several inventions or groups of inventions, namely:

1. claims: 1-8, 10, 14(completely); 11, 12, 15(partially)

    Invention I relates to a polyolefin composition comprising
    (A) 85-99wt% of a multiphase propylene copolymer having at
    least one glass transition temperature Tg (DMTA), and (B)
    1-15wt% of a hydrocarbon fluid capable of lowering said Tg
    of said copolymer (A), wherein said copolymer (A) comprises
    an elastomer determined as fraction soluble in cold xylene
    (XCS) in an amount of from 5-30wt% of the copolymer (A), and
    wherein said fraction soluble in cold xylene (XCS) has an
    intrinsic viscosity in the range of 0.5-4.5 dl/g; polymer
    film comprising said composition; an article comprising said
    film; use of said composition for producing a polymer film
    and use of a said polymer film for the production of an
    article.
    ---

2. claims: 9(completely); 11, 12, 15(partially)

    Invention II relates to a polymer film comprising a
    polyolefin composition and having a haze of less than 30% at
    100 micrometer film thickness both before and after a steam
    sterilization step at a temperature of 121°C for 30 minutes;
    an article comprising said film and use of sad film for the
    production of an article.
    ---

3. claim: 13

    Invention III relates to the use of a hydrocarbon fluid in a
    polyolefin composition comprising a multiphase propylene
    copolymer for improved retaining of transparency of a
    sterilized film comprising the composition.
    ---

24

**EP 2 390 279 A1**

**ANNEX TO THE EUROPEAN SEARCH REPORT
ON EUROPEAN PATENT APPLICATION NO.**   EP 09 01 5652

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2010

| Patent document cited in search report | | | Publication date | Patent family member(s) | | | Publication date |
|---|---|---|---|---|---|---|---|
| EP | 2022824 | A1 | 11-02-2009 | CN | 101772541 | A | 07-07-2010 |
| | | | | EP | 2176340 | A1 | 21-04-2010 |
| | | | | WO | 2009019277 | A1 | 12-02-2009 |
| | | | | US | 2010249329 | A1 | 30-09-2010 |
| WO | 2004060994 | A1 | 22-07-2004 | AU | 2003297134 | A1 | 29-07-2004 |
| US | 2005107534 | A1 | 19-05-2005 | NONE | | | |
| WO | 2006113132 | A1 | 26-10-2006 | CN | 101287790 | A | 15-10-2008 |
| | | | | EP | 1871833 | A1 | 02-01-2008 |
| | | | | JP | 2008536974 | T | 11-09-2008 |
| | | | | KR | 20070120150 | A | 21-12-2007 |
| US | 2006293460 | A1 | 28-12-2006 | EP | 1896536 | A1 | 12-03-2008 |
| | | | | WO | 2007001652 | A1 | 04-01-2007 |
| EP | 2058340 | A1 | 13-05-2009 | CN | 101855255 | A | 06-10-2010 |
| | | | | EP | 2220133 | A1 | 25-08-2010 |
| | | | | WO | 2009059780 | A1 | 14-05-2009 |
| EP | 1892264 | A1 | 27-02-2008 | CN | 101506296 | A | 12-08-2009 |
| | | | | EA | 200970222 | A1 | 28-08-2009 |
| | | | | EP | 1967547 | A1 | 10-09-2008 |
| | | | | WO | 2008022803 | A2 | 28-02-2008 |
| | | | | KR | 20090023426 | A | 04-03-2009 |
| | | | | US | 2009169907 | A1 | 02-07-2009 |

EPO FORM P0459

For more details about this annex : see Official Journal of the European Patent Office, No. 12/82

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5695840 A
- EP 0765654 A1
- US 5234879 A
- WO 9219653 A
- WO 9219658 A
- WO 9933843 A
- WO 9740080 A
- US 5171908 A
- US 5783531 A
- US 5906727 A
- US 5075269 A
- US 2817693 A
- US 4975177 A
- US 4921594 A
- US 4897178 A
- GB 1429494 A
- GB 1350257 A
- GB 1440230 A
- GB 1390359 A
- EP 464546 A
- EP 464547 A
- US 4594172 A
- US 4943672 A
- US 6080301 A
- US 6090989 A
- US 6165949 A

**Non-patent literature cited in the description**

- **GAHLEITNER et al.** *Macromol. Sci.-Phys.,* 2002, vol. B41, 833-49
- CRC HANDBOOK OF CHEMISTRY AND PHYSICS. CRC Press, 2001
- SYNTHETIC LUBRICANTS AND HIGH-PERFORMANCE FUNCTIONAL FLUIDS. Marcel Dekker, Inc, 1999, 1-52
- Modern Practice of Gas Chromatography. Wiley-Interscience, 1995
- **W. W. YAN ; J. J. KIRKLAND ; D. D. BLY.** Modern Size Exclusion Liquid Chromatographs. J. Wiley & Sons, 1979